**Europäisches Patentamt**

**European Patent Office**

**Office européen des brevets**

(19)

(11) Veröffentlichungsnummer: **0 123 220**

**A2**

(12) # EUROPÄISCHE PATENTANMELDUNG

(21) Anmeldenummer: 84104110.6

(22) Anmeldetag: 12.04.84

(51) Int. Cl.³: **B 23 B 31/04**

(30) Priorität: 20.04.83 DE 3314209

(43) Veröffentlichungstag der Anmeldung:
31.10.84 Patentblatt 84/44

(84) Benannte Vertragsstaaten:
CH DE FR GB IT LI SE

(71) Anmelder: Komet Stahlhalter- und Werkzeugfabrik
Robert Breuning GmbH
Auf dem Kies 3
D-7122 Besigheim(DE)

(72) Erfinder: Eckle, Otto
Friedenstrasse 9
D-7121 Löchgau(DE)

(74) Vertreter: Liebau, Gerhard, Dipl.-Ing.
Birkenstrasse 39
D-8900 Augsburg 22(DE)

(54) Werkzeugmaschinenspindel mit hierzu passendem Werkzeughalter.

(57) Eine Werkzeugmaschinenspindel weist an ihrem freien Ende eine zylindrische Aufnahmebohrung (3) und eine die Aufnahmebohrung umgebende, senkrecht zur Spindelachse (S-S) verlaufende, ringförmige Stirnfläche (4) auf. Ein in die Spindel einsetzbarer Werkzeughalter (9) weist einen in die Aufnahmebohrung (3) genau passenden zylindrischen Schaft (10) und eine diesen umgebende, senkrecht zur Schaftachse verlaufende Ringfläche (13) auf. Die Spindel (1) ist im Bereich der zylindrischen Aufnahmebohrung (3) mit zwei diametral gegenüberliegenden, radial verlaufenden Innengewinden (5, 6) versehen, in denen je eine mit einem kegelförmigen Ansatz (7a) oder einer kegelförmigen Vertiefung (8a) versehene Spannschraube (7, 8) verschraubbar ist. In einer Querbohrung (11) des Schaftes (10) ist ein Spannbolzen (12) radial verschiebbar, der an seinen beiden Enden je eine mit den kegelförmigen Ansätzen (7a) bzw. Vertiefungen (8a) der Spannschrauben (7, 8) zusammenwirkende kegelförmige Vertiefung (12b) bzw. einen kegelförmigen Ansatz (12a) aufweist. Der Abstand (a1) der Achse (A1) der Innengewinde (5, 6) von der Stirnfläche (4) ist etwas größer als der Abstand (a2) der Achse (A2) der Querbohrung (11) von der Ringfläche (13), so daß beim Anziehen einer der Spannschrauben (7) diese auf den Spannbolzen (12) im Sinne eines Aufeinanderpressens von Ringfläche (13) und Stirnfläche (4) einwirkt.

FIG. 1.

EP 0 123 220 A2

Werkzeugmaschinenspindel und hierzu passender Werkzeughalter.

Die Erfindung betrifft eine Werkzeugmaschinenspindel und
einen hierzu passenden Werkzeughalter, die an ihrem freien
Ende eine zylindrische Aufnahmebohrung und an ihrer Stirnseite eine die Aufnahmebohrung umgebende, senkrecht zur
Spindelachse verlaufende, ringförmige Stirnfläche, sowie
ein quer zur Spindelachse bewegliches, in die Aufnahmebohrung eindringendes Spannstück aufweist, wobei der in
die Spindel einsetzbare Werkzeughalter einen in die Aufnahmebohrung genau passenden zylindrischen Schaft, eine
diesen umgebende, senkrecht zur Schaftachse verlaufende
Ringfläche und am Schaft mit dem Spannstück derart zusammenwirkende Spannmittel aufweist, daß bei Querbewegung
des Spannstückes die Ringfläche an die Stirnfläche angepreßt wird.

Bei einer ähnlichen bekannten, für Drehmaschinen bestimmten Werkzeughalteraufnahme und einem hierzu passenden Werkzeughalter (VDI-Richtlinien, VDI 3425, Bl.2, Nov. 1972)
ist der Schaft des Werkzeughalters an einer Seite abgeflacht und mit einer quer zur Schaftachse verlaufenden Verzahnung versehen. In einer quer zur Bohrungsachse der Werkzeughalteraufnahme verlaufenden Ausnehmung ist ein ebenfalls mit einer Verzahnung versehenes Spannstück verschiebbar gelagert. Durch dieses Spannstück soll der Werkzeughalter gleichzeitig mit seinem Schaft radial an die Aufnahmebohrung und mit seiner Ringfläche axial gegen die Stirnfläche der Werkzeughalteraufnahme angepreßt werden. Obwohl der
Schaft und die Aufnahmebohrung mit enger Passung ineinandergreifen, muß zwischen Schaft und Aufnahmebohrung immer noch
geringfügiges Spiel vorhanden sein, damit der Schaft ohne
Gewalt in die Aufnahmebohrung geschoben werden kann. Durch
das Spannstück wird auf den Schaft eine quer zur Schaftachse und zur Bohrungsachse gerichtete, einseitig wirkende Kraft ausgeübt. Hierdurch wird der Schaft an dem, dem Spannstück gegenüberliegenden Teil der Aufnahmebohrung angedrückt. Dies hat zur Folge, daß bei festgespanntem Werkzeughalter die Schaftachse desselben außermittig parallel zur Bohrungsachse versetzt angeordnet ist. Hierdurch wird die Einbau-und Wiederholgenauigkeit und dadurch auch die Bearbeitungsgenauigkeit negativ beeinflußt. Außerdem hat die Anpressung des Schaftes an die Aufnahmebohrung eine hohe Reibkraft zwischen beiden Teilen und der miteinander in Eingriff stehenden Verzahnung zur Folge. Diese hohe Reibkraft wirkt einer Axialverschiebung des Schaftes in der Aufnahmebohrung entgegen, so daß die Ringfläche des Schaftes nicht mit ausreichender Kraft oder vielfach auch überhaupt nicht an die Stirnfläche der Werkzeughalteraufnahme angepreßt wird. Die auf das Werkzeug wirkenden Querkräfte werden dann unzureichend oder überhaupt nicht mehr von der Ringfläche auf die Stirnfläche übertragen und die Kraftübertragung erfolgt nur noch durch den im Durchmesser verhältnismäßig kleinen Schaft. Außerdem muß dann das Drehmoment allein von dem Spannstück auf den Schaft übertragen werden, was zu Verformungen der Verzahnungen führen kann. Wegen dieser Nachteile hat sich die oben beschriebene Verbindung zwischen Werkzeughalteraufnahme und Werkzeughalter nicht allgemein durchgesetzt und wird nur bei einigen NC-gesteuerten Drehmaschinen unter Inkaufnahme der oben geschilderten Nachteile verwendet. Sie soll in ähnlicher Form auch schon bei Bohr- und Fräswerken verwendet worden sein.

Bei Bohr- und Fräsmaschinen ist die allgemein gebräuchliche Verbindung zwischen Werkzeugmaschinenspindel und Werkzeughaltern ein am Werkzeughalter vorgesehener Kegelschaft, der in eine kegelige Aufnahmebohrung der Spindel eingreift. Hierbei wird beispielsweise ein ISO-Kegel 50 nach DIN 2080, dessen größter Durchmesser etwa 70 mm beträgt, in einer Spindel aufgenommen, deren Außendurchmesser 128 mm ist. Sämtliche auf die Schneide wirkenden Querkräfte müssen also von dem gegenüber der Werkzeugmaschinenspindel verhältnismäßig dünnen Kegelschaft auf die Spindel übertragen werden. Damit sich hierbei der Kegelschaft in der Aufnahmebohrung nicht lockert, bedarf es einer sehr hohen Einzugskraft einer in der Spindel angeordneten Einzugsvorrichtung, welche den Kegelschaft in die Aufnahmebohrung hineinzieht. Solche Einzugsvorrichtungen müssen bei Maschinen mit automatischem Werkzeugwechsel, also bei Bearbeitungszentren in der Lage sein, den Kegelschaft für den Wechselvorgang freizugeben. Man bedient sich daher häufig tellerfeder-betätigter Spannklauen, welche bei Entspannung der Tellerfedern sich hinter dem Kopf eines am Kegelschaftende angeordneten Kopfbolzens schließen und mit der Restkraft den Kegelschaft in die Aufnahmebohrung einziehen. Dabei entsteht auch bei sehr hoher Tellerfeder-Vorspannung eine beträchtliche Minderung der Einzugskraft, wobei es vorkommen kann, daß eine beträchtliche, radial gerichtete Schnittkraft, wirkend an einem weit aus der Spindel herausragenden Werkzeug, in Folge seiner Kegelgestalt das Werkzeug sogar in der Aufnahmebohrung der Spindel zeitweilig lockert. Es entstehen dann Rattererscheinungen. Es ist also diese Verbindung an heutigen, leistungsstarken Werkzeugmaschinen nicht immer in der Lage, die volle Maschinenleistung auf das Werkzeug zu übertragen. Ein weiterer Hauptgrund besteht darin, daß der größte Durchmesser des Kegelschaftes erheblich kleiner ist als der Spindel-Außendurchmesser. Da die Biegesteifigkeit des Werkzeughalters durch seinen kleinsten, nicht eingespannten Durchmesser bestimmt wird, ist die Biegesteifigkeit nur abhängig von dem größten Durchmesser des Kegelschaftes. In der Zerspannungstechnik gilt als Regel, daß Werkzeuge, z.B. Bohrstangen, dann schwingungssteif sind, wenn ihre freie Länge nicht größer ist, als etwa das 4 - maximal das 4,5fache des kleinsten, nicht eingespannten Durchmessers. Die größte freie Länge bei einem ISO-50-Kegelschaft wäre also 280 bzw. max. 315 mm.

Es ist auch ein Bohrwerkzeug bekannt (DE-PS 31 08 439), welches im wesentlichen aus einem oder mehrere Schneidplatten tragenden Kopfteil und einem an der Spindel einer Werkzeugmaschine befestigbaren Werkzeughalter besteht. Kopfteile und Werkzeughalter sind durch eine spezielle Verbindungsvorrichtung lösbar miteinander verbunden. Das Kopfteil weist an seinem, dem Werkzeughalter zugekehrten hinteren Ende einen zur Bohrwerkzeugachse konzentrischen, zylindrischen Paßzapfen auf, der von einer Ringfläche umgeben ist. Der Werkzeughalter besitzt zur Aufnahme des Paßzapfens eine von einer ringförmigen Stirnfläche umgebene Aufnahmebohrung. Im Bereich dieser Aufnahmebohrung sind zwei diametral gegenüberliegende, radial verlaufende Innengewinde vorgesehen. In jedem der Innengewinde ist eine Spannschraube mit einer kegelförmigen Vertiefung angeordnet. In einer Querbohrung des Paßzapfens ist ein Spannbolzen radial verschiebbar, der an seinen beiden Enden je einen kegelförmigen Ansatz aufweist, der mit den Vertiefungen der Spannschrauben zusammenwirkt. Der Abstand der Achse der Innengewinde von der Stirnfläche ist etwas größer als der Abstand der Achse der Querbohrung von der Ringfläche, so daß beim Anziehen einer der Spannschrauben diese auf den Spannbolzen im Sinne eines Aufeinanderpressens von Ringfläche und Stirnfläche einwirkt. Auch bei diesem bekannten Bohrwerkzeug ist jedoch der Werkzeughalter an seinem der Spindel zugekehrten Ende mit einem Kegelschaft versehen, der in die kegelige Aufnahmebohrung der Spindel eingreift. Die oben erwähnten Nachteile bezüglich der Verbindung zwischen Werkzeughalter und Spindel durch einen Kegelschaft treffen also auch für dieses bekannte Bohrwerkzeug zu.

Der Erfindung liegt die Aufgabe zugrunde, eine Werkzeugmaschinenspindel und einen hierzu passenden Werkzeughalter der eingangs erwähnten Art dahingehend zu verbessern, daß beim Festspannen des Werkzeughalters an der Werkzeugmaschinenspindel keine radiale Verlagerung der Achsen von Werkzeughalter und Spindel eintritt und die Ringfläche mit hoher Vorspannkraft an die Stirnfläche der Spindel angepreßt wird, um hierdurch einerseits die Einbau- und Bearbeitungsgenauigkeit zu verbessern und andererseits einen möglichst hohen Anteil des Drehmoments durch Reibschluß von der Stirnfläche auf die Ringfläche zu übertragen sowie außerdem eine biegesteife Verbindung zwischen Werkzeughalter und Spindel zu schaffen.

Diese Aufgabe wird nach der Erfindung dadurch gelöst, daß die Spindel im Bereich der zylindrischen Aufnahmebohrung zwei diametral gegenüberliegende, radial verlaufende Innengewinde mit je einer mit einem kegelförmigen Ansatz oder einer kegelförmigen Vertiefung versehenen Spannschraube aufweist, daß in einer Querbohrung des Schaftes ein Spannbolzen radial verschiebbar ist, der an seinen beiden Enden je eine mit den kegelförmigen Ansätzen bzw. Vertiefungen der Spannschrauben zusammenwirkende kegelförmige Vertiefungen bzw. einen kegelförmigen Ansatz aufweist, und daß der Abstand der Achse der Innengewinde von der Stirnfläche etwas größer ist als der Abstand der Achse der Querbohrung von der Ringfläche, so daß beim Anziehen einer der Spannschrauben diese auf den Spannbolzen im Sinne eines Aufeinanderpressens von Ringfläche und Stirnfläche einwirkt.

Die Erfindung geht also von dem Gedanken aus, zur Verbindung eines Werkzeughalters mit einer Werkzeugmaschinenspindel die aus der oben genannten DE-PS 31 08 439 offenbarte Verbindungsvorrichtung zu verwenden, die dort nur zur Verbindung von Werkzeugteilen untereinander dient. Hierdurch wird gegenüber den herkömmlichen Verbindungen zwischen Werkzeughalter und Spindel eine außerordentlich stabile und genaue Verbindung zwischen beiden Teilen geschaffen. Durch die Verwendung eines radial verschiebbaren Spannbolzens wird vermieden, daß beim Anziehen einer der Spannschrauben der Schaft in der Aufnahmebohrung radial zur Seite gedrückt wird. Da auf den Schaft keine Radialkräfte einwirken, findet auch keine Verlagerung der Schaftachse gegenüber der Spindelachse statt, so daß das Werkzeug genau koaxial zur Spindelachse angeordnet ist.

Es wird damit eine außerordentlich hohe Einbaugenauigkeit und Wiederholgenauigkeit gewährleistet. Durch
den Wegfall einer seitlichen Anpressung des Schaftes an
die Aufnahmebohrung, ist weiterhin sichergestellt, daß
die Kräfte der Spannschrauben über den Spannbolzen auf
den Schaft übertragen werden. Die Spannkraft einer Spannschraube bewirkt an der zweiten Spannschraube eine gleichgroße, jedoch entgegengesetzt wirkende Reaktionskraft,
wodurch die Spannkraft einer Schraube verdoppelt wird.
Durch die kegelförmigen Ansätze bzw. Vertiefungen erzeugen die radial wirkenden Spannkräfte der Spannschrauben
axial wirkende Kräfte. Durch den axialen Versatz der
Achsen der Spannschrauben und des Spannbolzens wird dieser
durch die axial wirkenden Kraftkomponenten ebenfalls in
axialer Richtung bewegt und preßt hierdurch die Ringfläche mit hoher Verspannkraft an die Stützfläche. Durch
die intensive und gleichmäßige Verspannung von Ringfläche

- 5 -

und Stützfläche wird über diese Flächen bereits ein hoher Anteil des Drehmomentes durch Reibschluß übertragen. Der Rest des Drehmomentes wird durch die Spannschrauben und den Spannbolzen übertragen. Wichtig ist ferner, daß die auf das Werkzeug einwirkenden Querkräfte bei guter Anlage der Ringfläche an der Stirnfläche von diesen beiden Flächen auf einen verhältnismäßig großen, dem Spindeldurchmesser entsprechenden Durchmesser übertragen werden. Hierdurch wird eine sehr biegesteife Verbindung zwischen Werkzeugmaschinenspindel und Werkzeughalter erreicht. Damit wird die Bearbeitung noch genauer, das Werkzeug ist weniger schwingungsgefährdet, es ist möglich, die Maschinenleistung besser auf das Werkzeug zu übertragen und auch größere Ausladungen des Werkzeuges sind möglich. Wenn jetzt am Werkzeughalter eine Ringfläche mit einem Durchmesser von 120 mm vorhanden ist, so behält ein solches Werkzeug seine Biegesteifigkeit bis zu einer Ausladung von wenigstens 480 mm. Es können damit also höhere Schnittleistungen und kürzere Bearbeitungszeiten erreicht werden. Ferner ist es von Vorteil, daß alle an der Verspannung beteiligten Elemente, die eventuell bei häufigem Werkzeugwechsel einem Verschleiß unterworfen sein könnten, nämlich die Spannschrauben und der Spannbolzen, ohne weiteres austauschbar sind.

Vorteilhafte Ausgestaltungen der Erfindung sind in den Unteransprüchen gekennzeichnet.

Die Erfindung ist anhand von in der Zeichnung dargestellten Ausführungsbeispielen in folgendem näher erläutert. Es zeigen:

Figur 1 einen Axialschnitt eines ersten Ausführungsbeispieles,
Figur 2 einen Radialschnitt nach der Linie II-II der Fig. 1,
Figur 3
und  4 Axialschnitte von zwei weiteren Ausführungsbeispielen.

Die Werkzeugmaschinenspindel 1 ist drehbar in dem Spindelstock 2 einer Werkzeugmaschine gelagert. Sie weist an ihrem vorderen freien Ende eine zylindrische Aufnahmebohrung 3 auf, die an der Stirnseite der Spindel von einer ringförmigen und senkrecht zur Spindelachse S-S verlaufenden ringförmigen Stirnfläche 4 umgeben ist. Die Spindel 1 weist ferner im Bereich der zylindrischen Aufnahmebohrung 3 zwei diametral gegenüberliegende, radial verlaufende Innengewinde 5, 6 auf, in denen je eine Spannschraube 7, 8 radial verschraubbar ist. Die Spannschraube 7 weist einen kegelförmigen Ansatz 7a und die Spannschraube 8 eine kegelstumpfförmige Vertiefung 8a auf. Der Kegelwinkel (Spitzenwinkel) des kegelförmigen Ansatzes 7a und der kegelförmigen Vertiefung 8a beträgt vorteilhaft 90°. Die Achse A1 der Innengewinde 5, 6 weist von der Stirnfläche 4 einen Abstand a1 auf.

Der Werkzeughalter 9 weist einen in die Aufnahmebohrung 3 mit sehr geringem Spiel (praktisch spielfrei) passenden zylindrischen Schaft 10 auf. Beträgt der Nenndurchmesser der zylindrischen Aufnahmebohrung 3 und des Schaftes 10 beispielsweise 63 mm, so weist die Aufnahmebohrung eine Toleranz von + 0,002 - +0,005 mm auf, der Schaft eine Toleranz von -0,002 - -0,005 mm. Der Werkzeughalter 9 trägt an seinem freien Ende 9a beispielsweise einen Bohrkopf, ein Ausdrehwerkzeug, einen Fräser, eine Reibahle od. dgl., die fest oder auswechselbar, gegebenenfalls auch unter Zwischenschaltung von Zwischenstücken mit dem Werkzeughalter 9 verbunden sind.

In dem zylindrischen Schaft 10 ist eine Querbohrung 11 vorgesehen, in welcher ein zylindrischer Spannbolzen 12 radial verschiebbar gelagert ist. Dieser Spannbolzen 12 weist an seinem einen Ende einen der kegelförmigen Vertiefung 8a entsprechenden kegelförmigen Ansatz 12a auf und an seinem anderen Ende eine dem kegelförmigen Ansatz 7a entsprechende Vertiefung 12b. Der Abstand a2 der Achse A2 der Querbohrung 11 von einer den Schaft 10 umgebenden Ringfläche 13, ist etwas kleiner als der oben definierte Abstand a1.

Damit der Werkzeughalter ohne Ausbau des Spannbolzens 12 an der Spindel 1 befestigt werden kann, ist es zweckmäßig, wenn die Länge L des Spannbolzens 12 etwas kleiner ist, als der Durchmesser D des Schaftes 10.

Der Spannbolzen 12 weist ferner im mittleren Bereich seiner Mantelfläche eine Ringnut 14 auf, die eine mehrfache Funktion hat. In die Ringnut 14 greift nämlich eine im Schaft 10 eingeschraubte Sicherungsschraube 15 ein. Der Durchmesser dieser Sicherungsschraube bzw. des in die Ringnut 14 eingreifenden Teiles 15a derselben, ist dabei kleiner gewählt als die axiale Länge der Ringnut 14, so daß sich der Spannbolzen 12 zwar in der Querbohrung 11 frei verschieben läßt, jedoch keinesfalls aus der Querbohrung 11 herausfällt. Die Ringnut 14 hat weiterhin die Aufgabe, Kühlflüssigkeit, die durch einen Kühlmittelkanal 16 der Spindel 1 in die Aufnahmebohrung 3 gelangt, in dem Kühlmittelkanal 17 des Werkzeughalters 9 bis zu den Schneiden des Werkzeuges weiterzuleiten.

Außerdem kann in dem Werkzeughalter 9 ein achsparalleler Indexierbolzen 27 vorgesehen sein, durch den die Winkelstellung des Werkzeughalters 9 gegenüber der Spindel 1 genau festgelegt wird. Dieser Indexbolzen 27 greift in eine entsprechende, nicht dargestellte achsparallele Bohrung der Spindel 1 ein.

Zum Werkzeugwechsel braucht lediglich die Spannschraube 7 soweit gelöst zu werden, daß das vordere Ende ihres kegelförmigen Ansatzes 7a nicht mehr in die Aufnahmebohrung 3 eintaucht. Der Spannbolzen 12 kann sich dann in der Quer-

- 8 -

bohrung 11 soweit verschieben, daß sein kegelförmiges
Ende 12a aus der kegelförmigen Vertiefung 8a austritt
und nunmehr der Werkzeughalter 9 nach links von der
Spindel 1 entfernt werden kann.

Daraufhin wird der Werkzeughalter 9 eines anderen Werkzeuges mit seinem Schaft 10 in die Aufnahmebohrung 3
eingesetzt. Wird nunmehr die Spannschraube 7 in dem Gewinde 5 radial nach innen verschraubt, so verschiebt
ihr kegelförmiger Ansatz 7a den Spannbolzen 12 radial,
so daß sein kegelförmiger Ansatz 12a wieder in die Vertiefung 8a der Spannschraube 8 eingreift. Die radial
wirkende Spannkraft F1 der Spannschraube 7 erzeugt an
der Spannschraube 8 eine entgegengesetzt wirkende gleichgroße Reaktionskraft F2. Durch den axialen Versatz der
Achsen A1 und A2 erzeugt jede der beiden Spannschrauben
7, 8 eine gleichgroße axial gerichtete Kraftkomponente
Fa. Demzufolge erzeugt die Spannkraft der Spannschraube
7 bei einem Kegelwinkel von 90° eine Verdoppelung der
Spannkräfte und drückt die Ringfläche 13 mit einer Kraft,
die zweimal so groß ist wie die Spannkraft F1 an die
ringförmige Stirnfläche 4 an. Da die Spannschrauben 7, 8
diametral gegenüberliegend auf den Spannbolzen 12 einwirken, ist die Verspannkraft zwischen den Flächen 4, 13
am ganzen Umfang gleichmäßig. Da sich der Spannbolzen
12 in der Querbohrung 11 verschieben läßt, wird auch keine
einseitig wirkende Kraft auf den Schaft 10 ausgeübt.
Infolgedessen fluchtet die Achse des Werkzeughalters 9
genau mit der Spindelachse S-S.

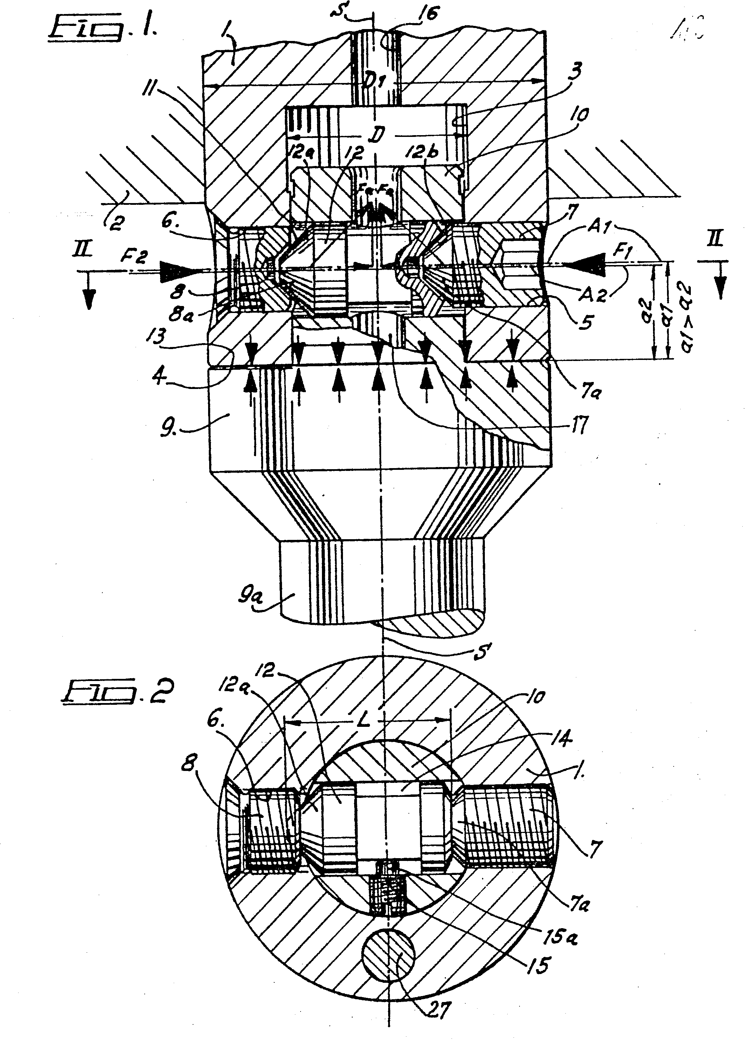

Wie man weiterhin aus Figur 1 erkennen kann, ist der
Außendurchmesser der Ringfläche 13 genauso groß wie der
Außendurchmesser der Stirnfläche 4, welcher dem Spindeldurchmesser D1 entspricht. Der Werkzeughalter 9 wird also
sozusagen auf einer sehr breiten Basis über die Flächen
13, 4 an der Spindel 1 abgestützt, was für eine schwingungsarme und biegesteife Verbindung zwischen beiden Teilen von wesentlicher Bedeutung ist.

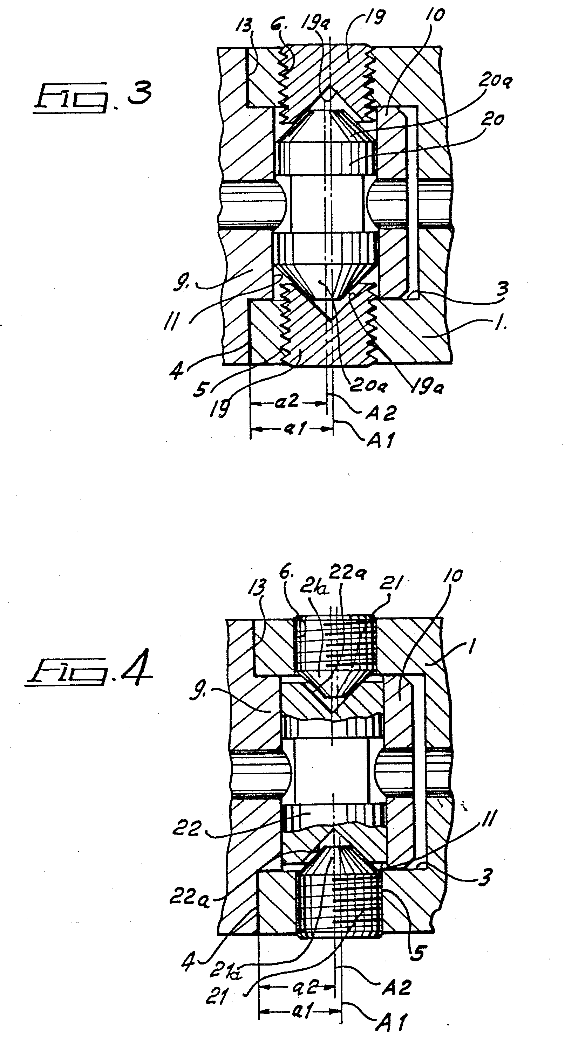

Die Verwendung von je einer Spannschraube 7 mit kegelförmigem Ansatz 7a und einer Spannschraube 8 mit kegelförmiger Vertiefung 8a, sowie einem entsprechenden Spannbolzen 12, der an einem Ende einen kegelförmigen Ansatz 12a und am anderen Ende eine kegelförmige Vertiefung 12b aufweist, hat sich in der Praxis als besonders vorteilhaft erwiesen. Gegebenenfalls könnte die Anordnung aber auch so getroffen sein, daß, wie es in Figur 3 dargestellt ist, beide Spannschrauben 19 je mit einer kegelförmigen Vertiefung 19a versehen sind, und der Spannbolzen 20 dementsprechend an beiden Enden je einen kegelförmigen Ansatz 20a aufweist. Alle übrigen Teile entsprechen in ihrer Ausgestaltung und ihrer Funktion den Teilen des vorhergehenden Ausführungsbeispieles, weshalb sie mit den gleichen Bezugszeichen bezeichnet sind und zu ihrer Erläuterung auf obige Ausführungen verwiesen wird.

Bei dem in Figur 4 dargestellten Ausführungsbeispiel sind umgekehrt beide Spannschrauben 21 mit kegelförmigen Ansätzen 21a versehen, während der Spannbolzen 22 beidseitig kegelförmige Vertiefungen 22a aufweist.

Die erfindungsgemäße Verbindung zwischen Spindel und Werkzeughalter könnte gegebenenfalls auch zur Verbindung eines genauso ausgestalteten Werkzeughalters mit einer am Support einer Drehmaschine angeordneten Werkzeughalteraufnahme verwendet werden, wobei dann diese bezüglich der Aufnahmebohrung und der beiden Spannschrauben sowie der Stirnfläche genauso ausgebildet ist wie das Aufnahmeende der Spindel.

Ansprüche

1. Werkzeugmaschinenspindel und hierzu passender Werkzeughalter, die an ihrem freien Ende eine zylindrische Aufnahmebohrung und an ihrer Stirnseite eine die Aufnahmebohrung umgebende, senkrecht zur Spindelachse verlaufende, ringförmige Stirnfläche, sowie ein quer zur Spindelachse bewegliches, in die Aufnahmebohrung eindringendes Spannstück aufweist, wobei der in die Spindel einsetzbare Werkzeughalter einen in die Aufnahmebohrung genau passenden zylindrischen Schaft, eine diesen umgebende, senkrecht zur Schaftachse verlaufende Ringfläche und am Schaft mit dem Spannstück derart zusammenwirkende Spannmittel aufweist, daß bei Querbewegung des Spannstückes die Ringfläche an die Stirnfläche angepreßt wird, dadurch gekennzeichnet, daß die Spindel (1) im Bereich der zylindrischen Aufnahmebohrung (3) zwei diametral gegenüberliegende, radial verlaufende Innengewinde (5,6) mit je einer mit einem kegelförmigen Ansatz (7a,21a) oder einer kegelförmigen Vertiefung (8a,19a) versehenen Spannschraube (7,8,19,21) aufweist, daß in einer Querbohrung (11) des Schaftes (10) ein Spannbolzen (12,20,22) radial verschiebbar ist, der an seinen beiden Enden je eine mit den kegelförmigen Ansätzen (7a,21a) bzw. Vertiefungen (8a,19a) der Spannschrauben (7,8,19,21) zusammenwirkende, kegelförmige Vertiefung (12b,22a) bzw. einen kegelförmigen Ansatz (12a,20a) aufweist, und daß der Abstand (a1) der Achse (A1) der Innengewinde (5,6) von der Stirnfläche (4) etwas größer ist als der Abstand (a2) der Achse (A2) der Querbohrung (11) von der Ringfläche (13), so daß beim Anziehen einer der Spannschrauben (7,19,21) diese auf den Spannbolzen (12,20,22) im Sinne eines Aufeinanderpressens von Ringfläche (13) und Stirnfläche (4) einwirkt.

2. Spindel nach Anspruch 1, dadurch gekennzeichnet, daß die Länge (L) des Spannbolzens (12,20,22) kleiner ist als der Durchmesser (D) des Schaftes (10).

3. Spindel nach Anspruch 1 und 2, dadurch gekennzeichnet, daß der Spannbolzen (12,20,22) in seiner Mantelfläche eine Ringnut (14) aufweist, in welche eine im Schaft (10) eingeschraubte Sicherungsschraube (15) eingreift, wobei die axiale Länge der Ringnut größer ist als der Durchmesser der Sicherungsschraube (15).

4. Spindel nach Anspruch 1, dadurch gekennzeichnet, daß die eine Spannschraube (8) eine kegelförmige Vertiefung (8a) und die andere Spannschraube (7) einen kegelförmigen Ansatz (7a) aufweist, und daß dementsprechend der Spannbolzen (12) an seinem einen Ende mit einem kegelförmigen Ansatz (12a) und an seinem anderen Ende mit einer kegelförmigen Vertiefung (12b) versehen ist.

FIG.1.

FIG.2.

0123220

komet

FIG. 3

FIG. 4

0123220